# EUROPÄISCHE PATENTSCHRIFT

(11) **EP 1 306 814 B1**
(45) Veröffentlichungstag und Bekanntmachung des Hinweises auf die Patenterteilung: **14.07.2010**
(21) Anmeldenummer: 02020782.5
(22) Anmeldetag: 17.09.2002
(51) Int. Cl.: G07C 1/26

(54) **Verfahren für den Brieftaubensport**
Method for pigeon racing
Procédé pour sport colombophile

(30) Priorität: 27.10.2001 DE 10154009
(43) Veröffentlichungstag der Anmeldung: 02.05.2003
(73) Patentinhaber: Motz Computer Service & Vertriebs GmbH, 37671 Höxter (DE)
(72) Erfinder: Motz, Helmut, 37671 Höxter (DE); Maul, Ludwig, Dr., 92237 Sulzbach-Rosenberg (DE)
(74) Vertreter: Menges, Rolf

(56) Entgegenhaltungen:
- EP-A- 0 758 119
- EP-A- 0 863 489
- EP-A- 0 889 445
- DE-A- 19 515 363
- DE-U- 20 117 380

## Beschreibung

Die Erfindung betrifft ein Verfahren für Einsatzstellengerät für den Brieftaubensport.

Eine derartiges Gerät, auch als Einsatzstellenantenne ESA bezeichnet, ist Bestandteil des im Brieftaubensport seit Jahren breit eingeführten elektronischen Konstatiersystems TI-PES®. Das Gerät wird im Einsatzstellen-Lokal der jeweiligen Reisevereinigung betrieben, in dem der Züchter seine Tauben zur Teilnahme am aktuellen Wettflug für den Transport zum Auflaßort einkorben läßt. Jede Taube ist mit einem Fußring ausgestattet, in dem in einem RF-Transponder eine feste, einmalige Identinformation enthalten ist, die sogenannte elektronische Ringnummer gerade dieser Taube. Diese Identinformation wird in der Einsatzstelle im Zuge des Einkorbens über die Antenne des Einsatzstellengerätes aus dem Fußring der darüber gehaltenen Taube ausgelesen und in das vom Züchter mitgebrachte Bediengerät eingespeichert. Dabei wird eine dieser gerade zum Einkorben anstehenden Taube und dem damit anstehenden Wettflug aktuell zuzuordnende Kontrollinformation in Form einer geheimen Zufallszahl generiert, die einerseits in einen im Tauben-Fußring enthaltenen Speicher eingeschrieben und andererseits zusätzlich im Bediengerät, der gerade erfaßten Identinformation zugeordnet, abgespeichert wird.

Zurückgekehrt zum heimatlichen Taubenschlag schließt der Züchter sein so in der Einsatzstelle beschicktes Bediengerät an seine Schlagantenne an. Der schließlich vom Flug heimkehrenden Taube wird dann über diese Antenne aus dem Fußring die dieser Taube fest zugeordnete Identinformation und die ihr nur für diesen Flug aktuell vergebene Kontrollinformation ausgelesen und zusammen mit dem Ankunftszeitpunkt in das Bediengerät eingespeichert. Darin erfolgt ein Vergleich mit dem zuvor in der Einsatzstelle vorgegebenen Datenpaar, das - wenn nach dem Einsetzen keine Unregelmäßigkeiten aufgetreten sind-mit dem aktuell eingelesenen Datenpaar aus Ident- und Kontrollinformation übereinstimmt. In diesem Fall ist der bei der Ankunft der Taube zusätzlich ins Bediengerät eingelesene Zeitpunkt gültig für die Aufstellung der Ergebnislisten im Vereinslokal, in dem der Züchter nach Rückkehr seiner Tauben deren Identinformationen und Ankunftszeiten aus dem Bediengerät auslesen läßt.

Nicht in die Ergebnisauswertung einbezogen werden demzufolge die Ankunftszeiten von solchen Tauben, deren Identinformationen bei der Rückkehr zum Heimatschlag andere Kontrollinformationen zugeordnet sind, als ihnen beim Einsatz zum Verbringen an den Auflaßort zugeteilt wurden. Das hat allerdings zur Folge, daß ein Züchter faktisch vom Wettbewerb ausgeschlossen ist, wenn in seinem Bediengerät nach dem Einsetzen der Tauben die Zuordnung der zu den Identinformationen aktuell vergebenen Kontrollinformationen verloren gegangen ist, etwa aufgrund einer mechanischen oder elektrischen Schadenseinwirkung auf das Bediengerät. Insofern trauert ein Züchter, dem solches Mißgeschick schon passiert ist, verständlicherweise dem an sich durch TIPES® überwundenen manuellen Konstatieren nach, bei dem jeder in den Schlag heimgekehrten Taube ein beim Einsetzen angelegter Gummiring eigens manuell vom Fuß wieder abgenommen und in eine Konstatieruhr eingedreht werden mußte. Sollte an dieser Uhr ein Defekt auftreten, dann konnte der Züchter sich einer beliebigen anderen Konstatieruhr für die noch heimkehrenden Tauben bedienen und deren Ringe zum jeweiligen Ankunftszeitpunkt dort eindrehen. Da er die beim Einsetzen den Tauben für den aktuellen Wettflug angelegten Gummiringe nach der Rückkehr in einer Konstatieruhr körperlich vorweisen konnte, waren trotz Wechsels der Konstatieruhr deren Konstatierzeiten für die Ergebnisauswertung gültig.

Ein weiteres Einsatzstellengerät und ein Verfahren für ein solches Gerät sind aus der Entgegenhaltung DE 195 15 363 bekannt.

DE 195 15 363 beschreibt ein Verfahren zur Durchführung von Taubenwettflügen, bei denen jede Taube eine Speicherbaustein mit einem nichtlöschbaren und einem löschbaren Speicher trägt. Vor jedem Wettflug wird in den löschbaren Speicher ein durch einen Zufallsgenerator erzeugter Zufallskode nur dann eingegeben, wenn dem Eingabegerät ein Berechtigungskode zugeführt wurde, über den nur die Wettkampfleitung verfügt. Vor jedem Wettflug wird eine Einsatzliste erstellt, die den Berechtigungskode, den Zeitpunkt der Zufuhr des Berechtigungskodes und die Verbandsringnummer der einzelnen Tauben umfasst. Diese Einsatzliste wird zusammen mit dem Zufallskode jeder Taube, der der jeweiligen Verbandsringnummer zugeordnet ist, in einem Sicherheitsspeicher abgelegt. Diese Daten sind vom Sicherheitsspeicher erst dann abrufbar, wenn die bei der Ankunft der Tauben registrierten Daten, nämlich die Verbandsringnummer und der Zufallskode, erfasst sind.

In Erkenntnis dieser Gegebenheiten liegt der Erfindung die Aufgabe zugrunde, für die berührungslos arbeitende Transponder-Konstatierung entsprechend dem System TIPES® eine manipulationsfeste Datensicherung zu schaffen, die dem Züchter das Konstatieren der heimkehrenden Tauben auch dann noch ermöglicht, wenn die für den aktuellen Flug in der Einsatzstelle erstellte und in das Bediengerät eingespeicherte tabellarische Zuordnung zwischen permanenten Tauben-Identinformationen und diesen einmalig zugeordneten Wettflug-Kontrollinformationen aus welchem Grunde immer im nun an die Einflugantenne angeschlossenen Bediengerät bei der Rückkehr der Tauben zum Heimatschlag nicht mehr für die Identitätskontrolle und Freigabe der Ankunftszeit verfügbar sein sollte.

Diese Aufgabe ist erfindungsgemäß durch die Kombination der wesentlichen im Hauptanspruch angegebenen Merkmale gelöst, wonach nun die beim Einsatz einer jeden Taube generierte und ihr im Taubenring sowie im Bediengerät zugeordnete geheime Kontrollinformation in dieser Zuordnung (also entsprechend einer intakten Tabelle im Bediengerät des Züchters) zusätzlich noch in das Einsatzstellengerät der Reisevereinigung eingespeichert wird. Dadurch kann der Züchter, dessen Bediengerät ausgefallen ist, nun die Identinformationen und Kontrollinformationen der heimkehrenden Tauben mit einem beliebigen anderen Bediengerät aufnehmen. Weil darin keine Zuordnung von Identinformationen zu Kontrollinformationen vorgegeben ist, erübrigt sich für diesen Ausnahmefall der Datenabgleich im Bediengerät - der wird nun gegenüber der beim Einkorben vorsorglich im Einsatzstellengerät zusätzlich abgespeicherten Tabelle vorgenommen, so daß für nun hier bestätigte Informationspaare auch die zu dieser Identinformation aufgenommene Ankunftszeit für die Erstellung der Gewinnlisten der Reisevereinigung gültig ist.

Um etwaige Manipulationsversuche wie wiederholtes Auslesen mit versuchsweise vorgegeben Informationen zu vermeiden, ist zweckmäßigerweise dafür gesorgt, daß der Speicher im Einsatzstellengerät nur einmal ausgelesen werden kann, also dann die zum Wettflug eingegebenen Datensätze gegen erneutes Auslesen sperrt. Etwa mit Fertigstellung der aus den Ankunftszeiten computergenerierten Siegerlisten kann dieser zusätzliche Speicher im Einsatzstellengerät über manuelle Auslösung wieder gelöscht werden.

Zur Steigerung der Datensicherheit können den Identinformationen im Speicher des Einsatzstellengerätes zugeordnet auch noch die Verbandsnummern der am Wettflug teilnehmenden Tauben eingespeichert werden. Zum Schutz gegen unbefugtes Auslesen bei geöffnetem Gerät werden die abzuspeichernden Datensätze zweckmäßigerweise kryptographisch im Speicher hinterlegt. Statt dessen oder zusätzlich kann das Einsatzstellengerät zum Unterbinden oder wenigstens Sichtbarmachen unbefugten Öffnens mechanisch oder elektronisch gesichert sein.

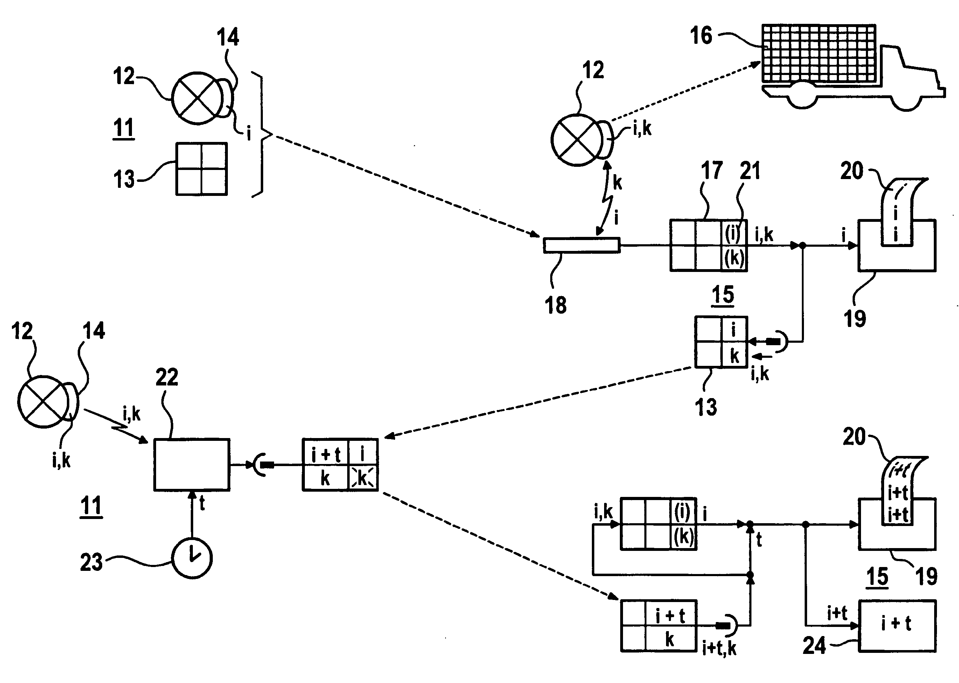

Bezüglich Einzelheiten der erfindungsgemäßen Lösung, deren Weiterbildungen und zusätzlichen Vorteilen wird auf die weiteren Ansprüche verwiesen, sowie auf nachstehende Beschreibung eines anhand der Zeichnung stark vereinfacht veranschaulichten Funktionsbeispieles zur Erfindung.

Der in einer Reisevereinigung organisierte Brieftaubenzüchter betreibt am Heimatschlag 11 seiner Tauben, von denen in der Zeichnung exemplarisch nur eine Taube 12 symbolisch veranschaulicht ist, ein transportables Bediengerät 13, dessen im Rahmen vorliegender Erfindung interessierenden Funktionen nachstehend im Kontext des berührungslosen Konstatiersystems TIPES® erläutert werden.

Einem Bein der Taube 12 ist ein sogenannter elektronischer Fußring 14 angelegt, der mit einem RF-Transponder bestückt ist, welcher eine überhaupt nur einmal vorkommende, unveränderliche alphanumerische Identinformation i bezüglich der Identität nur gerade dieser Taube 12 beinhaltet, die über ein von einer Antenne abgestrahltes hochfrequentes Abfragefeld auslesbar ist. In dem entsprechenden Schaltkreis des Transponders oder zusätzlich dazu enthält der Taubenring 14 einen Speicherbereich für eine Kontrollinformation k, die jeweils nur für die Teilnahme an einem aktuellen Wettflug an die Taube 12 (und nur an diese, an keine andere) vergeben und dazu in deren Ring 14 eingespeichert wird.

Zur Teilnahme am Wettflug begibt sich der Züchter mit seiner Taube 12 und seinem Bediengerät 13 zur Einsatzstelle 15 im Vereinslokal seiner Reiseflugvereinigung, um dort die Taube 12 für die Teilnahme registrieren zu lassen und dann die Taube 12 eingekorbt dem Transporter 16 zum Verbringen an den Auflaßort zu übergeben. Für den Registrierungsvorgang wird das Bediengerät 13 des Züchters an das von der Vereinigung betriebene Einsatzstellengerät 17 angeschlossen. Über dessen Antenne 18 wird die Identinformation i dieser gerade zum Einkorben übergebenen Taube 12 aus deren Fußring 14 ausgelesen und über einen Drucker 19 in einer Teilnehmer-Liste 20 festgehalten, sowie außerdem in das Bediengerät 13 eingespeichert. Zugleich wird ein Zufallsgenerator gestartet und für den aktuellen Wettflugeinsatz dieser Taube 12 eine niemandem bekannte Kontrollinformation k generiert, die einerseits in den Fußring 14 und andererseits parallel dazu - unter Zuordnung zur aktuellen Identinformation i - in das Bediengerät 13 eingespeichert wird. Der Drucker 19 ist nicht dafür ausgelegt, diese Kontrollinformation k wiederzugeben oder überhaupt nur aufzunehmen.

Zentraler Gegenstand der vorliegenden Erfindung ist es nun, entgegen der bisherigen Auslegung das Einsatzstellengerät 17 auch mit einem Speicher 21 zur Aufnahme dieses Informationspaares i/k praktisch parallel zu dessem Einlesen in das Bediengerät 13 auszustatten.

Wenn alle Tauben 12 im Zuge des Einkorbens für die Übergabe an den Transporter 16 so zumindest hinsichtlich ihrer Identinformation i und der ihr für den aktuellen Wettkampf zugeordneten geheimen, zufallsbasierenden Kontrollinformation k im Einsatzstellengerät 17 und im Bediengerät 13 abgespeichert sind, begibt sich der Züchter mit seinem Bediengerät 13 zurück zum Heimatschlag 11, um die Rückkehr seiner Tauben 12 abzuwarten. Deren Ankunft wird dort von der nun an das Bediengerät 13 angeschlossenen Einflugantenne 22 erfaßt, die aus dem Fußring 14 der jeweiligen Taube 12 deren Identinformation i und die ihr aktuell zugeordnete Kontrollinformation k ausliest und zusätzlich zu einem aus einer Echtzeit-Uhr 23 (vorzugsweise einer funkgestützten Präzisionsuhr) übernommenen aktuellen Zeitpunkt t der Identinformation i zugeordnet in das Bediengerät 13 einspeichert.

Ergibt dann ein im Bediengerät 13 nun vorgenommener Vergleich, daß das über die Einflugantenne 22 aufgenommene Informationspaar i/k nicht der Zuordnung der aktuell geltenden Kontrollinformation k zu dieser Identinformation i entspricht, wird der im Bediengerät 13 abzuspeichernde Zeitpunkt t mit einer Markierung versehen, der bei der tabellarischen Wettflugauswertung auf eine wahrscheinliche Manipulation hinweist und somit diese Ankunftszeit - zumindest zunächst einmal, vorbehaltlich einer späteren Überprüfung der Gegebenheiten - von der Wettkampfauswertung ausnimmt.

Für diese Wettkampfauswertung begibt der Züchter sich nach Rückkehr und Erfassung seiner Tauben 12 im Bediengerät 13 mit diesem wieder zur Einsatzstelle 15, wo das Bediengerät 13 an den Drucker 19 angeschlossen und zur Ergebnis-Liste 20 der Datensätze i+t sowie in einen Auswerterechner 24 ausgelesen wird. Dabei sind zunächst nur die Identinformationen i und die ihnen zugeordneten Ankunfts-Zeitpunkte t, zu denen eine zutreffende Kontrollinformation k in das Bediengerät 13 eingespeichert gewesen war, zur Ausgabe freigeschaltet; also nicht solche, bei denen mit der aktuell erfaßten Identinformation i eine Kontrollinformation k aus dem Taubenring 14 ausgelesen wird, zu der im Bediengerät 13 gar keine oder nur eine z.B. beschädigte oder sonstwie unbrauchbare Kontrollinformation k' bereitgehalten ist.

Gemäß vorliegender Erfindung kann nun aber, also bei fehlgeschlagenem Identitätsvergleich im Bediengerät 13 selbst, immer noch nachträglich in der Einsatzstelle 15, anhand der dortigen redundanten Abspeicherung mindestens der Datenpaare i/k im Einsatzstellengerät 17, überprüft werden, ob das Datenpaar i/k einer angekommenen Taube 12 der beim Einkorben vorgenommenen Zuordnung i/k entspricht; so daß gegebenenfalls auch der Ankunfts-Datensatz i+t dieser Taube 12 noch in die Auswertung 20/24 übernommen wird, obgleich bei der Rückkehr dieser Taube 12 ihre Kontrollinformation k im Bediengerät 13 etwa infolge einer Störeinwirkung unbrauchbar oder sogar gelöscht war.

Es ist wie schon erwähnt zweckmäßig, den erfindungsgemäß zu redundantem Bereithalten der aktuellen Datenpaare i/k zusätzlich im Einsatzstellengerät 17 untergebrachten Speicher 21 für nur einmaliges Auslesen zum Gegenprüfen der aktuell vom Bediengerät 13 am Schlag 11 aufgenommenen Datenpaare i/k auszulegen, also danach gegen etwaige weitere Ausleseversuche zu sperren. Dadurch ist sichergestellt, daß keine Bestätigungsversuche mit im Bediengerät 13 manipulierten, nämlich immer wieder veränderten Datenpaaren i/k vorgenommen werden können, bis vielleicht zufällig einmal eine Übereinstimmung mit der vorsorglich zusätzlichen Abspeicherung im Einsatzstellengerät 17 erzielt ist.

## Patentansprüche

1. Verfahren für den Brieftaubensport mit berührungslosem Konstatieren, bei dem mittels eines Einsatzstellengerätes (17) in einer Einsatzstelle (15) in Zusammenhang mit dem Einkorben einer Taube (12) ihrer Identinformation (i) für einen aktuell anstehenden Wettflug im Taubenring (14) eine zufallsbedingte geheime Kontrollinformation (k) zugeordnet und dieses Datenpaar (i/k) in das dem Heimatschlag (11) der Taube (12) zugeordnete Bediengerät (13) eingespeichert wird, um damit später das von der zum Schlag (11) zurückkehrenden Taube (12) abgefragte Datenpaar (i/k) in dem Bediengerät (13) zu vergleichen und im Falle der Übereinstimmung einen Datensatz mit Identinformation (i) und Ankunftszeit (t) für die Auswertung zur Verfügung zu stellen, und
bei dem die beim Einkorben erstellten Datensätze (i/k) zusätzlich in einem Speicher (21) des Einsatzstellengerätes (17) abgespeichert werden, um später mit dem Datenpaar (i/k) verglichen zu werden, das bei Rückkehr der Taube (12) zu ihrem Heimatschlag (11) in dem ursprünglich eingesetzten Bediengerät (13) oder in einem beliebigen anderen Bediengerät aufgenommen worden ist,
wobei für diesen Vergleich nur ein einmaliges Auslesen je eines Datenpaares (i/k) aus dem Speicher (21) des Einsatzstellengerätes (17) erlaubt und danach der Speicher (21) gegen etwaige weitere Ausleseversuche gesperrt wird.

2. Verfahren nach Anspruch 1, **dadurch gekennzeichnet, dass** das Einsatzstellengerät (17) mit mechanischen oder elektronischen Erkennungsmitteln gegen unautorisiertes Öffnen geschützt wird.

3. Verfahren nach einem der vorangehenden Ansprüche, **dadurch gekennzeichnet, dass** die Datenpaare (i/k) in dem Speicher (21) des Einsatzstellengerätes (17) kryptographisch hinterlegt werden.

4. Verfahren nach einem der vorangehenden Ansprüche, **dadurch gekennzeichnet, dass** in dem Speicher (21) des Einsatzstellengerätes (17) zusätzlich zur Identinformation (i) der Taube (12) deren Verbandsringnummer abgespeichert wird.

## Claims

1. A method for carrier-pigeon sport using contactless verification, in which, by means of an entry-point unit (17) in conjunction with the basketing of a pigeon (12) at the entry point (15), a random secret control information (k) is associated with the pigeon's ID information (i) for the currently forthcoming race in the pigeon's ring (14) and this data pair (i/k) is stored in the control unit (13) associated with the home cote (11) of the pigeon (12) so that it can later be compared with the data pair (i/k) in the control unit (13) interrogated from the pigeon (12) returning to the cote (11) and in the event of a match, can be used to provide a data record containing ID information (i) and time of arrival (t) for evaluation, and
in which the data records (i/k) created during basketing are also stored in a memory (21) of the control unit (17) for comparing later with the data pair (i/k) which has been recorded when the pigeon (12) returns to the cote (11) in the originally used control unit (13) or in any other control unit,
whereby for this comparison it is allowed to read a respective data pair (i/k) from the memory (21) of the entry-point unit (17) only once, the memory (21) afterwards being blocked to prevent any further readings.

2. The method according to Claim 1, wherein the entry-point unit (17) is protected against unauthorised opening by mechanical or electronic identification means.

3. The method according to any one of the preceding claims, wherein the data pairs (i/k) are stored in the memory (21) of the entry-point unit (17) cryptographically.

4. The method according to any one of the preceding claims wherein the pigeon's federation ring number is stored in the memory (21) of the entry-point unit (17) in addition to the ID information (i) for the pigeon (12).

## Revendications

1. Procédé pour le sport colombophile avec constatation sans contact physique,
selon lequel, au moyen d'un appareil de lieu de chargement (17), en relation avec la mise en cage d'un pigeon (12) en un lieu de chargement (15), une information de contrôle chiffrée aléatoire (k) est associée dans la bague (14) du pigeon à son information d'identité (i) pour un vol de compétition actuellement à venir, et cette paire de données (i/k) est enregistrée dans l'appareil de commande (13) associé au pigeonnier d'origine (11) du pigeon (12), afin de la comparer ultérieurement, dans l'appareil de commande (13), à la paire de données (i/k) consultée sur le pigeon (12) revenant au pigeonnier (11), et à fournir en cas de coïncidence un jeu de données avec l'information d'identité (i) et la date/heure d'arrivée (t), aux fins d'évaluation,
et selon lequel les jeux de données (i/k) créés lors de la mise en cage sont en outre enregistrés dans une mémoire (21) de l'appareil de lieu de chargement (17), afin d'être ultérieurement comparés avec la paire de données (i/k) qui, lors du retour du pigeon (12) à son pigeonnier d'origine (11), a été enregistrée dans l'appareil de commande (13) initialement utilisé ou dans un autre appareil de commande quelconque,
sachant que pour cette comparaison, une seule lecture de chaque paire de données (i/k) à partir de la mémoire (21) de l'appareil de lieu de chargement (17) est autorisée, à la suite de quoi la mémoire (21) est verrouillée à l'encontre d'éventuelles autres tentatives de lecture.

2. Procédé selon la revendication 1, **caractérisé en ce que** l'appareil de lieu de chargement (17) est protégé par des moyens d'identification mécaniques ou électroniques empêchant son ouverture non autorisée.

3. Procédé selon l'une des revendications précédentes, **caractérisé en ce que** la paire de données (i/k) est enregistrée de manière cryptographique dans la mémoire (21) de l'appareil de lieu de chargement (17).

4. Procédé selon l'une des revendications précédentes, **caractérisé en ce qu'**en plus de l'information d'identité (i) du pigeon (12), son numéro de bague fédérale est enregistré dans la mémoire (21) de l'appareil de lieu de chargement (17).
